# EUROPEAN PATENT SPECIFICATION

(11) **EP 1 362 883 B1**
(45) Date of publication and mention of the grant of the patent: **02.11.2005**
(21) Application number: 03010099.4
(22) Date of filing: 05.05.2003
(51) Int. Cl.: C08K 3/00, C08L 23/22, C08K 5/14

(54) **Rubber compound for a vibration dampening device**
Gummimischung für eine Schwingungsdämpfungsvorrichtung
Composé de caoutchouc pour dispostif d'amortissement de vibrations

(30) Priority: 16.05.2002 CA 2386646
(43) Date of publication of application: 19.11.2003
(73) Proprietor: Lanxess Inc., Sarnia, Ontario N7T 7M2 (CA)
(72) Inventor: Gronowski, Adam A., Sarnia, Ontario M7S 3WS (CA); Bhattacharjee, Susmita, Dr., Sarnia, Ontario N7T 4S4 (CA); Kaszas, Gabor, South London, Ontario N6C 3Z6 (CA)
(74) Representative: Zobel, Manfred

(56) References cited:
- EP-A- 0 376 227
- EP-A- 0 474 406
- WO-A-02/16452
- JP-A- 6 172 547
- US-A- 3 584 080
- PATENT ABSTRACTS OF JAPAN vol. 005, no. 022 (M-054), 10 February 1981 (1981-02-10) & JP 55 149435 A (MATSUSHITA ELECTRIC IND CO LTD), 20 November 1980 (1980-11-20)
- PATENT ABSTRACTS OF JAPAN vol. 005, no. 144 (C-071), 11 September 1981 (1981-09-11) & JP 56 076444 A (SHIN ETSU POLYMER CO LTD), 24 June 1981 (1981-06-24)
- PATENT ABSTRACTS OF JAPAN vol. 2002, no. 07, 3 July 2002 (2002-07-03) & JP 2002 069254 A (NOK CORP), 8 March 2002 (2002-03-08)

## Description

### FIELD OF THE INVENTION

The present invention relates to an article useful to dampen and/or isolate vibrations generated by mechanical devices, said article comprising at least one peroxide curable compound comprising a substantially gel-free butyl polymer. In another of its aspect, the present invention relates to a substantially gel-free compound comprising at least one polymer having repeating units derived from at least one isomonoolefin monomer, at least one multiolefin monomer or β-pinene, at least one multi-olefin crosslinking agent and at least one chain transfer agent, at least one filler and a peroxide curing system.

### BACKGROUND

Machines such as automobile, truck or jet engines, compressors and industrial air conditioners, automotive exhaust systems and similar dynamic devices generate significant vibration during operation. This vibration is transmitted directly to support structures with which the dynamic devices is mounted or associated, e.g., an automobile or aircraft frame, a compressor frame, or a floor or rooftop. In order to minimize transfer of vibration from the operating dynamic device to the associated support structure, i.e., isolate the vibrations, it is common to interpose vibration damping and/or isolation means between the dynamic device and the associated support structure. Examples of such vibration damping and/or isolation means would be vibration-absorbing, elastomeric automobile or truck engine mounts placed between the brackets which are used to bolt the engine to the associated auto or truck frame, exhaust hangers, pads interposed between an air conditioner or compressor and a frame or floor and the like.

Another area where vibration damping is important is in the electronics industry, e.g., acoustic, computer-associated and game devices. The vibration from a motorized equipment often radiates from the object as audible noise and potentially reduces performance or damages the instrument. Most portable electronics, CD drives and vehicle-mounted electronics are especially sensitive to vibration and shock and must be isolated from that energy to ensure proper performance.

Isolation mounts reduce the transmission of energy from one body to another by providing a resilient connection between them. Selecting an improper mount for an application, however, can actually make the problem worse. The incorrect mount may reduce the high frequency vibration, but resonant conditions at lower frequencies can actually amplify the induced vibration. During an impact, the mount deflects and returns some of the energy by rebounding. Preventing this energy return can extend product life and prevent performance problems such as skipping in a CD drive and read/write errors on a hard drive.

Adding dumping to a resilient mount greatly improves its responses. Damping reduces the amplitude of the resonant vibration by converting a portion of the energy into low-grade heat. Damping also dissipates shock energy during an impact.

Vibration damping and/or isolation materials known in the art include vulcanized objects in various shapes; e.g., squares, rectangles or cylinders prepared from vulcanized rubber. These dampening and/or isolation devices can be solid rubber, foamed rubber or solid rubber enclosing a fluid-containing cavity. Suitable rubbers which have been used in such applications include halogenated and non-halogenated butyl rubber, natural rubber and synthetic elastomeric polymers and copolymers of butadiene.

High damping properties of butyl rubber are well known and utilized. A large number of methyl groups along the macromolecular chains of the rubber interfere mechanically with one another and reduce the speed with which the molecules respond to deformation.

In many of its applications, a butyl rubber is used in the form of cured compounds. Vulcanizing systems usually utilized for butyl rubber include sulfur, quinoids, resins, sulfur donors and low-sulfur high performance vulcanization accelerators. However, sulfur residues in the compound are often undesirable, e.g., they promote corrosion of parts in contact with the compound.

The preferred vulcanization system is based on peroxides since this produces an article free of detrimental residues. In addition, peroxide-cured compounds offer higher thermal resistance compared to that of sulfur-cured materials. For example, engine mounts associated with modem engines must be able to withstand temperatures as high as 150 °C. for periods in the range of 1,000 to 5,000 hours without significant loss of dynamic properties, in order to meet current and anticipated automotive standards. (see e.g. US-6,197,885-B1 and US-5,904,220). It is recognized, however, that the sulfur-cured butyl rubber system has thermal stability of up to 120 °C vs. 150 °C for peroxide- cured butyl-based polymers (e.g. JP-A-172547/1994).

If peroxides are used for crosslinking and curing of conventional butyl rubbers, the main chains of the rubber degrade and satisfactorily cured products are not obtained. As an alternative, pre-crosslinked butyl rubber such as commercially available Bayer® XL-10000 (or, formerly XL-20 and XL-50) can be crosslinked with peroxides, e.g., see Walker et al., "Journal of the Institute of the Rubber Industry", 8 (2), 1974, 64-68. This speciality rubber is partially crosslinked with divinylbenzene in the polymerization stage, which proceeds via a cationic mechanism.

While said commercial pre-crosslinked polymers exhibit excellent properties in many applications in which they are used today, they have a gel content of at least 50 wt. % which sometimes makes the even dispersion of fillers and curatives normally used during vulcanization difficult. This increases the likelihood of under- and over-cured areas within the rubbery article, rendering its physical properties inferior and unpredictable. Also, the Mooney viscosity of this rubber is high, usually 60-70 units ML (1+8@125°C) which may cause significant processing difficulties, especially in mixing and sheeting stages. To overcome this problem, processability-improving polymers are often added to the pre-crosslinked butyl rubber. Such polymers are particularly useful for improving the mixing or kneading property of a rubber composition. They include natural rubbers, synthetic rubbers (for example, IR, BR, SBR, CR, NBR, IIR, EPM, EPDM, acrylic rubber, EVA, urethane rubber, silicone rubber, and fluororubber) and thermoplastic elastomers (for example, of styrene, olefin, vinyl chloride, ester, amide, and urethane series). These processability-improving polymers may be used in the amount of up to 100 parts by weight, preferably up to 50 parts by weight, and most preferably up to 30 parts by weight, per 100 parts by weight of a partially crosslinked butyl rubber. However, the presence of other rubbers dilutes said desirable properties of butyl rubber.

In some special applications it is desirable to have a vibration-damping material with very low hardness. To lower the hardness of the article, large amounts of an extender component (50-200 parts) like paraffin process oil are added to the formulation. The damping characteristics of the extender may not be as good as of the rubber itself or the extender introduces its own undesirable characteristics to the final product (e.g., bleeding of oil).

Co-Pending Canadian Application CA-2,316,741 discloses polymers of isobutylene, isoprene, divinylbenzene (DVB) and a chain-transfer agent, such as diisobutylene, which are substantially gel-free and have an improved processability. However, this application is silent about peroxide curing and vibration dampening properties.

The rubbers utilized in the present invention display much lower Mooney viscosity (even below 10 units) and a very high solubility, including totally soluble materials. Due to these characteristics their processability is improved compared to commercial pre-crosslinked butyl polymers (ML ca. 60-70 units, solubility < 50 wt. %). At the same time, this rubber modified with a chain-transfer agent is peroxide curable and imparts to the compounds the advantages of peroxide-cure system over sulfur-cure system.

### SUMMARY

The present invention provides a compound comprising
a. at least one elastomeric polymer comprising repeating units derived from at least one C₄ to C₇ isomonoolefin monomer, at least one C₄ to C₁₄ multiolefin monomer or β-pinene, at least one multiolefin cross-linking agent and at least one chain transfer agent, said polymer containing less than 15 wt.% of solid matter insoluble within 60 min in cyclohexane boiling under reflux,
b. at least one filler and
c. a peroxide curing system.

Another aspect of the invention is a vulcanized rubber part useful to dampen and/or isolate vibrations generated by mechanical devices comprising said substantially gel-free peroxide-curable compound.

Yet another aspect of the invention is a mechanical device comprising a dynamic means which generates heat and/or vibrations and a static structure which supports said dynamic means and which is connected to said dynamic means and having a vulcanized rubber part comprising said substantially gel-free peroxide-curable compound interposed between said dynamic means and said static structure at said point of connection.

Yet another aspect of the invention is a motor or engine mount comprising said substantially gel-free peroxide-curable compound.

### DETAILLED DESCRIPTION OF THE INVENTION

The present invention relates to butyl rubber polymers. The terms "butyl rubber", "butyl polymer" and "butyl rubber polymer" are used throughout this specification interchangeably. While the prior art in using butyl rubber refers to polymers prepared by reacting a monomer mixture comprising a C₄ to C₇ isomonoolefin monomer and a C₄ to C₁₄ multiolefin monomer or β-pinene, this invention specifically relates to elastomeric polymers comprising repeating units derived from at least one C₄ to C₇ isomonoolefin monomer, at least one C₄ to C₁₄ multiolefin monomer or β-pinene, at least one multiolefin cross-liking agent and at least one chain transfer agent. The butyl polymer of this invention may be halogenated or non-halogenated.

In connection with this invention the term "substantially gel-free" is understood to denote a polymer containing less than 15 wt.% of solid matter insoluble within 60 min in cyclohexane boiling under reflux, preferably less than 10 wt.%, in particular less than 5 wt%.

The present invention is not restricted to any particular C₄ to C₇ isomonoolefin monomers. Preferred C₄ to C₇ monoolefins are isobutylene, 2-methyl-1-butene, 3-methyl-1-butene, 2-methyl-2-butene, 4-methyl-1-pentene and mixtures thereof. The most preferred C₄ to C₇ isomonoolefin monomer is isobutylene.

Furthermore, the present invention is not restricted to any particular C₄ to C₁₄ multiolefin. However conjugated or non-conjugated C₄ to C₁₄ diolefins are particularly useful. Preferred C₄ to C₁₄ multiolefin monomers are isoprene, butadiene, 2-methylbutadiene, 2,4-dimethylbutadiene, piperyline, 3-methyl-1,3-pentadiene, 2,4-hexadiene, 2-neopentylbutadiene, 2-methly-1,5-hexadiene, 2,5-dimethly-2,4-hexadiene, 2-methyl-1,4-pentadiene, 2-methyl-1,6-heptadiene, cyclopentadiene, methylcyclopentadiene, cyclohexadiene, 1-vinyl-cyclohexadiene or mixtures thereof. The most preferred C₄ to C₁₄ multiolefin monomer is isoprene.

Even more, the present invention is not restricted to any particular multiolefin cross-linking agent. Preferably, the multiolefin cross-linking agent is a multiolefinic hydrocarbon compound. Examples of these are norbornadiene, 2-isopropenylnorbornene, 5-vinyl-2-norbornene, 1,3,5-hexatriene, 2-phenyl-1,3-butadiene, divinylbenzene, diisopropenylbenzene, divinyltoluene, divinylxylene or C₁ to C₂₀ alkyl-substituted derivatives of the above compounds. More preferably, the multiolefin crosslinking agent is divinylbenzene, diisopropenylbenzene, divinyltoluene, divinylxylene or C₁ to C₂₀ alkyl substituted derivatives of said compounds. Most preferably the multiolefin crosslinking agent is divinylbenzene or diisopropenylbenzene.

As it will be apparent to the skilled in the art, the chemical formula for preferred multiolefin monomers and multiolefin cross-linking agents overlap. The skilled in the art will appreciate that the difference between these compounds is a functional one. While a monomer is prone to propagating the chain in one dimension, a cross-linking agent will be prone to reacting with two or more chains instead. If a chemical compound reacts under the given conditions rather as a cross-linking agent or as a monomer is easily, unmistakably and directly available through some very limited preliminary experiments. While an increase in concentration of cross-linking agent will result in a directly related increase in cross-linking density in the polymer, an increase in concentration of a monomer will usually not affect the cross-linking density in the same way. Preferable multiolefin monomers will not result in crosslinking if present in an amount of up to 5 mol% in the reaction mixture.

Even more, the present invention is not restricted to any particular chain transfer agent. However, the chain transfer agent should preferably be a strong chain transfer agent - i.e., it should be capable of reacting with the growing polymer chain, terminate its further growth and subsequently initiate a new polymer chain. The type and amount of chain transfer agent is dependent upon the amount of crosslinking agent. At low concentrations of crosslinking agent low amounts of chain transfer agent and/or a weak chain transfer agent can be employed. As the concentration of the crosslinking agent is increased, however, the chain transfer agent concentration should be increased and/or a stronger chain transfer agent should be selected. Use of a weak chain transfer agent should be avoided because too much can decrease the polarity of the solvent mixture and also would make the process uneconomical. The strength of the chain transfer agent may be determined conventionally - see, for example, J. Macromol. Sci.-Chem., A1(6) pp. 995-1004 (1967). A number called the transfer constant expresses its strength. According to the values published in this paper, the transfer constant of 1-butene is 0. Preferably, the chain transfer agent has a transfer coefficient of at least 10, more preferably at least 50. Non-limiting examples of useful chain transfer agents are piperylene, 1-methylcycloheptene, 1-methyl-1-cyclopentene, 2-ethyl-1-hexene, 2,4,4-trimethyl-1-pentene, indene and mixtures thereof. The most preferred chain transfer agent is 2,4,4-trimethyl-1-pentene.

Preferably, the monomer mixture to be polymerized comprises in the range of from 65 % to 98.98 % by weight of at least one C₄ to C₇ isomonoolefin monomer, in the range of from 1.0 % to 20% by weight of at least one C₄ to C₁₄ multiolefin monomer or β-pinene, in the range of from 0.01 % to 15 % by weight of a multifunctional cross-linking agent, and in the range of from 0.01 % to 10 % by weight of a chain-transfer agent. More preferably, the monomer mixture comprises in the range of from 70 % to 98.89 % by weight of a C₄ to C₇ isomonoolefin monomer, in the range of from 1.0 % to 10% by weight of a C₄ to C₁₄ multiolefin monomer or β-pinene, in the range of from 0.05 % to 10 % by weight of a multifunctional cross-linking agent, and in the range of from 0.05 % to 10 % by weight of a chain-transfer agent. Most preferably, the monomer mixture comprises in the range of from 85 % to 98.85 % by weight of a C₄ to C₇ isomonoolefin monomer, in the range of from 1.0 % to 5 % by weight of a C₄ to C₁₄ multiolefin monomer or β-pinene, in the range of from 0.1 % to 5 % by weight of a multifunctional cross-linking agent, and in the range of from 0.05 % to 5 % by weight of a chain-transfer agent. It will be apparent to the skilled in the art that the total of all monomers will result in 100 % by weight.

The monomer mixture may contain minor amounts of one or more additional polymerizable co-monomers. For example, the monomer mixture may contain a small amount of a styrenic monomer. Preferred styrenic monomers are p-methylstyrene, styrene, α-methyl-styrene, p-chlorostyrene, p-methoxystyrene, indene (including indene derivatives) and mixtures thereof. If present, it is preferred to use the styrenic monomer in an amount of up to 5.0% by weight of the monomer mixture. The values of the C₄ to C₇ isomonoolefin monomer(s) and/or the C₄ to C₁₄ multiolefin monomer(s) or β-pinene will have to be adjusted accordingly to result again in a total of 100 % by weight.

The use of even other monomers in the monomer mixture is possible provided, of course, that they are copolymerizable with the other monomers in the monomer mixture.

The present invention is not restricted to a special process for preparing/polymerizing the monomer mixture. This type of polymerization is well known to the skilled in the art and usually comprises contacting the reaction mixture described above with a catalyst system. Preferably, the polymerization is conducted at a temperature conventional in the production of butyl polymers - e.g., in the range of from -100°C to +50°C. The polymer may be produced by polymerization in solution or by a slurry polymerization method. Polymerization is preferably conducted in suspension (the slurry method) - see, for example, Ullmann's Encyclopedia of Industrial Chemistry (Fifth, Completely Revised Edition, Volume A23; Editors Elvers et al., 290-292).

The inventive polymer preferably has a Mooney viscosity ML (1+8 @ 125 °C) in the range of from 5 to 40 units, more preferably in the range of from 7 to 35 units.

As an example, in one embodiment the polymerization is conducted in the presence of an inert aliphatic hydrocarbon diluent (such as n-hexane) and a catalyst mixture comprising a major amount (in the range of from 80 to 99 mole percent) of a dialkylaluminum halide (for example diethylaluminum chloride), a minor amount (in the range of from 1 to 20 mole percent) of a monoalkylaluminum dihalide (for example isobutylaluminum dichloride), and a minor amount (in the range of from 0.01 to 10 ppm) of at least one of a member selected from the group comprising water, aluminoxane (for example methylaluminoxane) and mixtures thereof. Of course, other catalyst systems conventionally used to produce butyl polymers can be used to produce a butyl polymer which is useful herein - see, for example, "Cationic Polymerization of Olefins: A Critical Inventory" by Joseph P. Kennedy (John Wiley & Sons, Inc. © 1975, 10-12).

Polymerization may be performed both continuously and discontinuously. In the case of continuous operation, the process is preferably performed with the following three feed streams:
I) solvent/diluent + isomonoolefin(s) (preferably isobutene)
II) multiolefin(s) (preferably diene, isoprene), multifunctional cross-linking agent(s)and chain-transfer agent(s)
III) catalyst

In the case of discontinuous operation, the process may, for example, be performed as follows: The reactor, pre-cooled to the reaction temperature, is charged with solvent or diluent and the reactants. The initiator is then pumped in the form of a dilute solution in such a manner that the heat of polymerization may be dissipated without problem. The course of the reaction may be monitored by means of the evolution of heat.

The polymer may be halogenated. Preferably, the halogenated butyl polymer is brominated or chlorinated. Preferably, the amount of halogen is in the range of from 0.1 to 8%, more preferably from 0.5% to 4%, most preferably from 1.0 % to 3.0%, by weight of the polymer. The halogenated tetrapolymer will usually be produced by halogenating a previously-produced tetrapolymer derived from the monomer mixture described hereinabove. However, other possibilities are well known to the skilled in the art. One method to produce a halogenated tetrapolymer is disclosed in United States patent 5,886,106. Thus, the halogenated butyl rubber may be produced either by treating finely divided butyl rubber with a halogenating agent such as chlorine or bromine, or by producing brominated butyl rubber by the intensive mixing, in a mixing apparatus, of brominating agents such as N-bromosuccinimide with a previously made butyl rubber. Alternatively, the halogenated butyl rubber may be produced by treating a solution or a dispersion in a suitable organic solvent of a previously made butyl rubber with corresponding brominating agents. See, for more detail, Ullmann's Encyclopedia of Industrial Chemistry (Fifth, Completely Revised Edition, Volume A23; Editors Elvers et al., 314, 316-317). The amount of halogenation during this procedure may be controlled so that the final polymer has the preferred amounts of halogen described hereinabove.

The compound further comprises at least one active or inactive filler. The filler is preferably:
- highly dispersed silicas, prepared e.g., by the precipitation of silicate solutions or the flame hydrolysis of silicon halides, with specific surface areas of in the range of from 5 to 1000 m²/g, and with primary particle sizes of in the range of from 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas in the range of from 20 to 400 m²/g and primary particle diameters in the range of from 10 to 400 nm;
- natural silicates, such as kaolin and other naturally occurring silica;
- glass fibres and glass fibre products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene;
or mixtures thereof.

Examples of preferred mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the tetrapolymer. For many purposes, the preferred mineral is silica, especially silica made by carbon dioxide precipitation of sodium silicate. Dried amorphous silica particles suitable for use in accordance with the invention may have a mean agglomerate particle size in the range of from 1 to 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil® S and Vulkasil® N, from Bayer AG.

It might be advantageous to use a combination of carbon black and mineral filler in the inventive compound. In this combination the ratio of mineral fillers to carbon black is usually in the range of from 0.05 to 20, preferably 0.1 to 10. For the rubber composition of the present invention it is usually advantageous to contain carbon black in an amount of in the range of from 20 to 200 parts by weight, preferably 30 to 150 parts by weight, more preferably 40 to 100 parts by weight.

The compound further comprises at least one peroxide curing system. The invention is not limited to a special peroxide curing system. For example, inorganic or organic peroxides are suitable. Preferred are organic peroxides such as dialkylperoxides, ketalperoxides, aralkylperoxides, peroxide ethers, peroxide esters, such as di-tert.-butylperoxide, bis-(tert.-butylperoxyisopropyl)-benzol, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethylcyclohexane, benzoylperoxide, tert.-butylcumylperoxide and tert.-butylperbenzoate. Usually the amount of peroxide in the compound is in the range of from 1 to 10 phr (= per hundred rubber), preferably from 1 to 5 phr. Subsequent curing is usually performed at a temperature in the range of from 100 to 200°C, preferably 130 to 180°C. Peroxides might be applied advantageously in a polymer-bound form. Suitable systems are commercially available, such as Polydispersion T(VC) D-40 P from Rhein Chemie Rheinau GmbH, D (= polymerbound di-tert.-butylperoxy-isopropylbenzol).

Even if it is not preferred, the compound may further comprise other natural or synthetic rubbers such as BR (polybutadiene), ABR (butadiene/acrylic acid-C₁-C₄-alkylester-copolymers), CR (polychloroprene), IR (polyisoprene), SBR (styrene/butadiene-copolymers) with styrene contents in the range of 1 to 60 wt%, NBR (butadiene/acrylonitrile-copolymers with acrylonitrile contents of 5 to 60 wt%, HNBR (partially or totally hydrogenated NBR-rubber), EPDM (ethylene/propylene/diene-copolymers), FKM (fluoropolymers or fluororubbers), and mixtures of the given polymers.

The rubber composition according to the invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend inter alia on the intended use. Conventional amounts are e.g. from 0.1 to 50 wt.%, based on rubber. Preferably the composition furthermore comprises in the range of 0.1 to 20 phr of an organic fatty acid, preferably a unsaturated fatty acid having one, two or more carbon double bonds in the molecule which more preferably includes 10% by weight or more of a conjugated diene acid having at least one conjugated carbon-carbon double bond in its molecule. Preferably those fatty acids have in the range of from 8- 22 carbon atoms, more preferably 12-18. Examples include stearic acid, palmic acid and oleic acid and their calcium-, zinc-, magnesium-, potassium- and ammonium salts.

The ingredients of the final compound are mixed together, suitably at an elevated temperature that may range from 25 °C to 200 °C. Normally the mixing time does not exceed one hour and a time in the range from 2 to 30 minutes is usually adequate. The mixing is suitably carried out in an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted pre-crosslinking (= scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

Furthermore, the invention provides shaped rubber parts, either solid, foamed, or fluid filled useful to isolating vibrations and dampening vibrations generated by mechanical devices comprising the inventive compound. More particularly, the invention provides mechanical devices comprising a dynamic means which generates heat and/or vibrations, e.g., an automotive engine, an electric motor, and a static structure which supports said dynamic means, e.g., an automotive frame, and which is connected to said dynamic means, e.g., by bolting together brackets attached to the frame and engine, and having a vulcanized rubber vibration, isolation, and/or damping part interposed between said dynamic means and said static structure at said point of connection, e.g., one or more disc-shaped rubber parts sandwiched between the engine and frame brackets. The improvement provided by the invention comprises the utilization as said rubber part of a shaped, vulcanized composition comprising said peroxide curable rubber compound. Vulcanization of a molded article, for example a motor mount, may be carried out in heated presses under conditions well known to those skilled in the art. Curing time will be affected by the thickness of the article and the concentration and type of curing agent as well as the initial halogen content of the halogenated polymer in case a halogenated polymer is to be used. However, the vulcanization parameters can readily be established with a few experiments utilizing e.g., a laboratory characterization device well known in the art, the Monsanto Oscillating Disc Cure Rheometer (described in detail in American Society for Testing and Materials, Standard ASTM D 2084). Alternatively, the curable composition can be injection molded to form shaped articles and held in the mold for a sufficient time to form a cured, shaped article.

The composition of the present invention may be used in producing vibration damping and/or isolation parts used to isolate or decrease the effect of vibrations from motor, engines and the like. It is particularly suitable for use in the production of elastomeric mountings for control of vibration, for example automotive body and engine mounts; automotive exhaust hangers; dynamic absorbers (e.g., shock absorbers); bushings; automotive suspension bumpers, and the like.

The compositions are especially useful in the assembly of automotive engine mounts, which are subjected to high operating temperatures of up to about 150 deg.C. In such an application, molded parts in the shape of discs are interposed between motor and auto frame brackets prior to bolting the brackets together to secure the motor to the frame. For especially high-quality isolation use of hydromounts, i.e., rubber enclosing a fluid, is desirable. The enclosed liquids are generally high boiling. Typically, the liquids are selected from glycols such as ethylene glycol and propylene glycol. The compositions are also useful as part of electronic-comprising systems subjected to vibration and high operating temperatures of up to ca. 150 °C, e.g., in vehicle-mounted electronics.

The invention is further illustrated by the following examples.

### Examples

Methyl chloride (Dow Chemical) serving as a diluent for polymerization and isobutylene monomer (Matheson, 99 %) were transferred into a reactor by condensing a vapor phase. Aluminium chloride (99.99 %), isoprene (99 %) and 2,4,4-trimethyl-1-pentene (97 %9 were from Aldrich. The inhibitor was removed from isoprene by using an inhibitor removing disposable column from Aldrich. Commercial divinylbenzene (ca. 64 %) was from Dow Chemical.

The mixing of a compound with carbon black (IRB #7) and peroxide (DI-CUP 40C, Struktol Canada, Ltd.) was done using a miniature internal mixer (Brabender MIM) from C. W. Brabender, consisting of a drive unit (Plasticorder® Type PL-V151) and a data interface module.

The Mooney viscosity test was carried out according to ASTM standard D-1646 on a Monsanto MV 2000 Mooney Viscometer ML (1+8 @ 125 deg.C).

The Moving Die Rheometer (MDR) test was performed according to ASTM standard D-5289 on a Monsanto MDR 2000 (E). The upper die oscillated through a small arc of 1 degree.

The solubility of a polymer was determined after the sample refluxed in cyclohexane over 60-minute period.

Curing was done using an Electric Press equipped with an Allan-Bradley Programmable Controller.

Stress-strain tests were carried out using the Instron Testmaster Automation System, Model 4464.

### Example 1/ comparative example:

A commercially available pre-crosslinked butyl polymer (XL-10000) having a content of a soluble fraction of 25.2 wt. % and Mooney viscosity of 63.6 units ML (1+8 @ 125 °C) was compounded using the following recipe:
Polymer: 100 phr
Carbon black (IRB#7): 50 phr
Peroxide: (DI-CUP 40C): 1.0 phr

The mixing was done in a Brabender internal mixer (capacity ca. 75 cc). The starting temperature was 60 °C and the mixing speed 50 rpm. The following steps were carried out:
0 min: polymer added
1.5 min: carbon black added, in increments
7.0 min: peroxide added
8.0 min: mix removed

The obtained compound was passed through a mill (6"x12") six times with a tight nip gap.

The compound (Compound 1) was subsequently cured at 160 °C and tested. The Shore A2 hardness was 58 points and the ultimate elongation 152 %.

### Example 2

To a 50 mL Erlenmeyer flask, 0.45 g of AlCl₃ was added, followed by 100 mL of methyl chloride at - 30 °C. The resulting solution was stirred for 30 min at - 30 °C and then cooled down to - 95 °C, thus forming the catalyst solution.

To a 2000 mL glass reactor equipped with an overhead stirrer, 900 mL of methyl chloride at - 95 °C were added, followed by 100.0 mL isobutylene at - 95 °C, 3.0 mL of isoprene at room temperature, 1.96 mL of commercial DVB at room temperature, and 1.82 mL of 2,4,4-trimethyl-1-pentene at room temperature. The reaction mixture was cooled down to - 95 °C and 10.0 mL of the catalyst solution was added to start the reaction.

The reaction was carried out in MBRAUN® dry box under the atmosphere of dry nitrogen. The reaction was terminated after 5 minutes by adding into the reaction mixture 10 mL of ethanol containing some sodium hydroxide.

The obtained polymer was steam coagulated and dried on a 6"x12" mill at ca. 105 °C followed by drying in a vacuum oven at 50 °C to a constant weight. The Mooney viscosity of the rubber was 8.1 units (1'+8' @125 °C) and the solubility in cyclohexane was 97.9 wt.%.

The polymer was compounded using the same recipe and methodology given in Example 1. The compound (Compound 2) was subjected to curing at 160 °C and tested. The Shore A2 hardness was 26 points and the ultimate elongation 699 %.

This example demonstrates that the substantially gel-free polymer can be used to obtain a peroxide cured compound with a significantly lower hardness compared to the one based on commercial XL-10000. Since this polymer with low Mooney viscosity becomes chemically incorporated upon curing it could be used instead of a process oil without any bleeding problems associated with the use of 'traditional' extenders.

### Example 3

Polymer 3 was obtained in the same way as Polymer 2 described in Example 2, except that 4.0 mL of DVB and 3.0 mL of 2,4,4-trimethyl-1-pentene were used in the present case. The Mooney viscosity of the rubber was 7.5 units (1'+8' @125 °C) and the solubility in cyclohexane was 98.0 wt.%. Therefore, these two raw polymer characteristics were virtually identical for Polymer #2 and Polymer #3.

The polymer 3 was compounded using the same recipe and methodology given in Example 1. The compound (Compound 3) was subjected to curing at 160 °C and tested. The Shore A2 hardness was 41 points and the ultimate elongation 284 %.

This example shows that although the Mooney viscosity and solubility of the polymer 3 were very similar to those of polymer 2, the properties of the cured compounds were quite different. In the present case, the Shore A2 hardness was much higher and the ultimate elongation was much lower than the corresponding properties for the Compound #2. Therefore, by properly adjusting the composition of the reaction feed (in particular, the content of DVB and the chain transfer agent) it is possible to prepare a range of easily processible, peroxide-curable materials with designed properties for specific applications.

## Claims

1. A compound comprising
a. at least one elastomeric polymer comprising repeating units derived from at least one C₄ to C₇ isomonoolefin monomer, at least one C₄ to C₁₄ multiolefin monomer or β-pinene, at least one multiolefin cross-linking agent and at least one chain transfer agent, said polymer containing less than 15 wt.% of solid matter insoluble within 60 min in cyclohexane boiling under reflux,
b. at least one filler and
c. a peroxide curing system.

2. A compound according to claim 1, wherein the C₄ to C₇ isomonoolefin monomer(s) are selected from the group consisting of isobutylene, 2-methyl-1-butene, 3-methyl-1-butene, 2-methyl-2-butene, 4-methyl-1-pentene and mixtures thereof.

3. A compound according to claim 1 or 2, wherein the C₄ to C₁₄ multiolefin monomer(s) are selected from the group consisting of isoprene, butadiene, 2-methylbutadiene, 2,4-dimethylbutadiene, piperyline, 3-methyl-1,3-pentadiene, 2,4-hexadiene, 2-neopentylbutadiene, 2-methyl-1,5-hexadiene, 2,5-dimethyl-2,4-hexadiene, 2-methyl-1,4-pentadiene, 2-methyl-1,6-heptadiene, cyclopentadiene, methylcyclopentadiene, cyclohexadiene, 1-vinyl-cyclohexadiene and mixtures thereof.

4. A compound according to any of claims 1 to 3, wherein the multiolefin cross-linking agent(s) are selected from the group consisting of norbornadiene, 2-isopropenylnorbornene, 2-vinylnorbornene, 1,3,5-hexatriene, 2-phenyl-1,3-butadiene, divinylbenzene, diisopropenylbenzene, divinyltoluene, divinylxylene or C₁ to C₂₀ alkyl-substituted derivatives of the above compounds.

5. A compound according to any of claims 1 to 4, wherein the chain transfer agent(s) are selected from the group consisting of piperylene, 1-methylcycloheptene, 1-methyl-1-cyclopentene, 2-ethyl-hexene, 2,4,4-trimethyl-1-pentene, indene and mixtures thereof.

6. A compound according to any of claims 1 to 5, wherein the peroxide system is an organic peroxide.

7. A shaped rubber part comprising a compound according to any of claims 1 to 6.

8. A rubber part according to claim 7, wherein the rubber part is solid, foamed, or fluid filled.

9. A dampening device comprising a compound according to any of claims 1 to 6.

10. A dampening or insulation device according to claim 8, where in the dampening device is solid, foamed or fluid filled.

11. A mechanical device according to claim 10 comprising a dynamic means which generates heat and/or vibrations and a static structure which supports said dynamic means and which is connected to said dynamic means and having a vulcanized rubber isolation and/or damping device according to claim 8 interposed between said dynamic means and said static structure at said point of connection.

## Patentansprüche

1. Compound, umfassend:
a. wenigstens ein elastomeres Polymer, das Repetiereinheiten umfasst, die von wenigstens einem C₄- bis C₇-Isomonoolefin-Monomer, wenigstens einem C₄- bis C₁₄-Multiolefinmonomer oder β-Pinen abgeleitet sind, wenigstens ein Multiolefin-Vernetzungsmittel und wenigstens ein Kettenübertragungsmittel, wobei das Polymer weniger als 15 Gew.-% feste Substanz umfasst, die bei 60 min Rückfluss in siedendem Cyclohexan unlöslich ist;
b. wenigstens einen Füllstoff; und
c. ein Peroxid-Vulkanisationssystem.

2. Compound gemäß Anspruch 1, wobei das bzw. die C₄- bis C₇-Isomonoolefin-Monomere aus der Gruppe ausgewählt sind, die aus Isobutylen, 2-Methyl-1-buten, 3-Methyl-1-buten, 2-Methyl-2-buten, 4-Methyl-1-penten und Gemischen davon besteht.

3. Compound gemäß Anspruch 1 oder 2, wobei das bzw. die C₄- bis C₁₄-Multiolefinmonomere aus der Gruppe ausgewählt sind, die aus Isopren, Butadien, 2-Methylbutadien, 2,4-Dimethylbutadien, Piperylen, 3-Methyl-1,3-pentadien, 2,4-Hexadien, 2-Neopentylbutadien, 2-Methyl-1,5-hexadien, 2,5-Dimethyl-2,4-hexadien, 2-Methyl-1,4-pentadien, 2-Methyl-1,6-heptadien, Cyclopentadien, Methylcyclopentadien, Cyclohexadien, 1-Vinylcyclohexadien und Gemischen davon besteht.

4. Compound gemäß einem der Ansprüche 1 bis 3, wobei das bzw. die Multiolefin-Vernetzungsmittel aus der Gruppe ausgewählt sind, die aus Norbornadien, 2-Isopropenylnorbornen, 5-Vinyl-2-norbornen, 1,3,5-Hexatrien, 2-Phenyl-1,3-butadien, Divinylbenzol, Diisopropenylbenzol, Divinyltoluol, Divinylxylol oder C₁- bis C₂₀-Alkyl-substituierten Derivaten der obigen Verbindungen besteht.

5. Compound gemäß einem der Ansprüche 1 bis 4, wobei das bzw. die Kettenübertragungsmittel aus der Gruppe ausgewählt sind, die aus Piperylen, 1-Methylcydohepten, 1-Methyl-1-cyclopenten, 2-Ethyl-1-hexen, 2,4,4-Trimethyl-1-penten, Inden und Gemischen davon besteht.

6. Compound gemäß einem der Ansprüche 1 bis 5, wobei es sich bei dem Peroxid-System um ein organisches Peroxid handelt.

7. Geformtes Kautschukteil, das ein Compound gemäß einem der Ansprüche 1 bis 6 umfasst.

8. Kautschukteil gemäß Anspruch 7, wobei das Kautschukteil massiv, geschäumt oder mit einem Fluid gefüllt ist.

9. Dämmungsvorrichtung, die ein Compound gemäß einem der Ansprüche 1 bis 6 umfasst.

10. Dämmungs- oder Isolationsvorrichtung gemäß Anspruch 8, wobei die Dämmungsvorrichtung massiv, geschäumt oder mit einem Fluid gefüllt ist.

11. Mechanische Vorrichtung gemäß Anspruch 10, umfassend eine dynamische Einrichtung, die Wärme und/oder Schwingungen erzeugt, und eine statische Struktur, die die dynamische Einrichtung trägt und mit der dynamischen Einrichtung verbunden ist und eine Isolations- und/oder Dämmungsvorrichtung aus vulkanisiertem Kautschuk gemäß Anspruch 8 aufweist, die sich an dem Verbindungspunkt zwischen der dynamischen Einrichtung und der statischen Struktur befindet.

## Revendications

1. Composé comprenant
a. au moins un polymère élastomère comprenant des motifs répétés de chaîne moléculaire dérivés d'au moins un monomère d'isomono-oléfine en C₄ à C₇, au moins un monomère de multi-oléfine en C₄ à C₁₄ ou un β-pinène, au moins un agent de réticulation de la multioléfine et au moins un agent de transfert de chaîne, ledit polymère contenant moins de 15 % en poids de matière solide insoluble dans du cyclohexane en ébullition au reflux pendant 60 min,
b. au moins une charge et
c. un système de vulcanisation au peroxyde.

2. Composé selon la revendication 1, dans lequel le ou les monomères d'isomono-oléfine en C₄ à C₇ sont choisis parmi le groupe constitué de l'isobutylène, du 2-méthyl-1-butène, 3-méthyl-1-butène, 2-méthyl-2-butène, 4-méthyl-1-pentène et des mélanges de ceux-ci.

3. Composé selon la revendication 1 ou 2, dans lequel le ou les monomères de multi-oléfine en C₄ à C₁₄ sont choisis parmi le groupe constitué d'isoprène, butadiène, 2-méthylbutadiène, 2,4-diméthylbutadiène, pipéryline, 3-méthyl-1,3-pentadiène, 2,4-hexadiène, 2-néopentylbutadiène, 2-méthyl-1,5-hexadiène, 2,5-diméthyl-2,4-hexadiène, 2-méthyl-1,4-pentadiène, 2-méthyl-1,6-heptadiène, cyclopentadiène, méthylcyclopentadiène, cyclohexadiène, 1-vinyl-cyclohexadiène et des mélanges de ceux-ci.

4. Composé selon l'une quelconque des revendications 1 à 3, dans lequel le ou les agents de réticulation de la multioléfine sont choisis parmi le groupe constitué de norbornadiène, 2-isopropénylnorbornène, 2-vinylnorbornène, 1,3,5-hexatriène, 2-phényl-1,3-butadiène, divinylbenzène, diisopropénylbenzène, divinyltoluène, divinylxylène ou des dérivés constitués par un alkyle en C₁ à C₂₀ des composés ci-dessus.

5. Composé selon l'une quelconque des revendications 1 à 4, dans lequel le ou les agents de transfert de chaîne sont choisis parmi le groupe constitué de pipérylène, 1-méthylcycloheptène, 1-méthyl-1-cyclopentène, 2-éthyl-hexène, 2,4,4-triméthyl-1-pentène, indène et des mélanges de ceux-ci.

6. Composé selon l'une quelconque des revendications 1 à 5, dans lequel le système peroxyde est un peroxyde organique.

7. Partie de caoutchouc formée comprenant un composé selon l'une quelconque des revendications 1 à 6.

8. Partie de caoutchouc selon la revendication 7, dans laquelle la partie de caoutchouc est solide, expansée ou chargée de fluide.

9. Dispositif d'amortissement comprenant un composé selon l'une quelconque des revendications 1 à 6.

10. Dispositif d'amortissement ou d'isolation selon la revendication 8, dans lequel le dispositif d'amortissement est solide, expansé ou chargé de fluide.

11. Dispositif mécanique selon la revendication 10 comprenant un moyen dynamique qui génère de la chaleur et/ou des vibrations et une structure statique qui soutient ledit moyen dynamique et qui est reliée audit moyen dynamique et ayant une isolation de caoutchouc vulcanisé et/ou un dispositif amortissant selon la revendication 8 interposé entre ledit moyen dynamique et ladite structure statique audit point de liaison.
